# EUROPEAN PATENT SPECIFICATION

(11) **EP 4 391 514 B1**
(45) Date of publication and mention of the grant of the patent: **03.09.2025**
(21) Application number: 22899806.8
(22) Date of filing: 18.05.2022
(51) Int. Cl.: H04N 23/50, F16M 13/02, F16B 21/02, F16B 21/16

(54) **CAMERA MOUNTING ASSEMBLY AND CAMERA**
KAMERAMONTAGEANORDNUNG UND KAMERA
ENSEMBLE DE MONTAGE DE CAMÉRA ET CAMÉRA

(30) Priority: 30.11.2021 CN 202111447144
(43) Date of publication of application: 26.06.2024
(73) Proprietor: Hangzhou Hikvision Digital Technology Co., Ltd., Hangzhou, Zhejiang 310051 (CN)
(72) Inventor: ZHU, Shuaishuai, Hangzhou, Zhejiang 310051 (CN); XIANG, Kun, Hangzhou, Zhejiang 310051 (CN); QI, Fuqiang, Hangzhou, Zhejiang 310051 (CN); TIAN, Wei, Hangzhou, Zhejiang 310051 (CN)
(74) Representative: Epping - Hermann - Fischer
(86) International application number: PCT/CN2022/093477
(87) International publication number: WO 2023/097986

(56) References cited:
- WO-A1-2015/118600
- CN-A- 114 157 787
- CN-U- 209 495 083
- CN-U- 210 890 788
- US-B2- 8 379 089

## Description

The present application claims the priority to a Chinese patent application No. 202111447144.8 filed with the China National Intellectual Property Administration on November 30, 2021, and entitled "CAMERA MOUNTING ASSEMBLY AND CAMERA".

### TECHNICAL FIELD

The disclosure relates to cameras, and in particular, to a camera mounting assembly and a camera.

### BACKGROUND

This section provides merely background information related to the disclosure and which is not necessarily refer to prior art.

In many cases, a camera needs to shoot at a fixed point, and needs to be connected and fixed with an external structure by mounting assemblies. Currently, many mounting assemblies are for small cameras and have average robustness, when facing a heavier camera, there is a problem of low reliability and easy loosening.

CN 209 495 083 U discloses a camera mounting assembly according to the preamble of claim 1.

### SUMMARY

The disclosure provides a camera mounting assembly and a camera, which can firmly fix a heavier camera and effectively reduce the risk of the camera shaking and loosening in a vibrating environment.

The invention is set out in the appended set of claims.

It should be understood that the above general description and the following detailed description are exemplary and explanatory only, and do not limit the present disclosure.

### BRIEF DESCRIPTION OF THE DRAWINGS

In order to more clearly describe the technical solutions of the embodiments of the disclosure and the prior art, accompanying drawings that need to be used in the embodiments and the prior art will be briefly described below. Obviously, the accompanying drawings described below are only some of embodiments of the disclosure.
Figure 1 is a front view of a camera according to an embodiment of the disclosure;
Figure 2 is a front view of a camera mounting assembly according to an embodiment of the disclosure;
Figure 3 is a cross-sectional view of the camera mounting assembly shown in Figure 2;
Figure 4 is a cross-sectional view of the camera mounting assembly shown in Figure 2 along the A-A section;
Figure 5 is a front view of a mounting head of the camera mounting assembly according to the embodiment shown in Figure 2.
Figure 6 is a perspective schematic view of the mounting base of the camera mounting assembly according to the embodiment shown in Figure 2;
Figure 7 is an exploded schematic view of the mounting base of the camera mounting assembly according to the embodiment shown in Figure 2;
Figure 8 is a bottom view of the mounting base of the camera mounting assembly according to the embodiment shown in Figure 2.

### DETAILED DESCRIPTION

Exemplary embodiments will be described in detail herein, examples of which are illustrated in the accompanying drawings. When referring to the drawings in the following description, the same numbers in different drawings indicate the same or similar elements unless otherwise indicated. The implementations described in the following exemplary embodiments do not represent all implementations in accordance with the disclosure. Rather, they are merely examples of apparatus and methods consistent with some aspects of the disclosure as detailed in the appended claims.

Terms in the disclosure are used merely for the purpose of describing particular embodiments and are not intended to limit the disclosure. Unless otherwise defined, technical terms or scientific terms used in the disclosure shall have usual meanings understood by a person with ordinary skill in the art to which the disclosure relates. The terms "first", "second" and the like as used in the specification and claims of the disclosure do not indicate any order, quantity or importance, but are only used to distinguish different components. Similarly, the terms "a" or "an" and the like do not indicate a limitation in number, but rather indicate the presence of at least one. The terms "multiple" or "several" means two and more. Unless otherwise indicated, similar terms such as "front", "rear", "lower" and/or "upper" are for convenience of description only and are not intended to limit one position or one spatial orientation. The terms "include" or "comprise" and the like mean that the elements or objects appearing before "include" or "comprise" cover the elements or objects listed after "include" or "comprise" and their equivalents, and do not exclude other elements or objects. The terms "connected to" or "connected with" and the like are not limited to physical or mechanical connections, but may include electrical connections, whether direct or indirect.

The terms used in the disclosure are merely for the purpose of describing particular embodiments and are not intended to limit the disclosure. The singular forms "a", "the" and "said" used in the disclosure and the appended claims are intended to include the plural forms as well, unless the context clearly indicates otherwise. It will also be understood that the term "and/or" as used herein refers to and includes any or all possible combinations of one or more of the associated listed items.

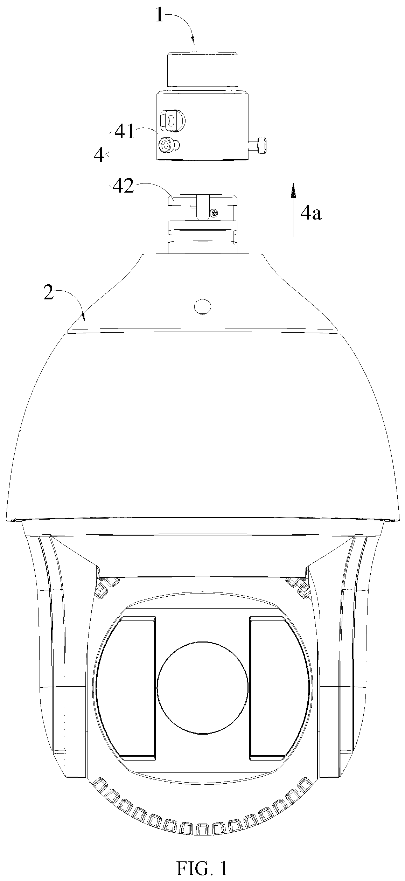

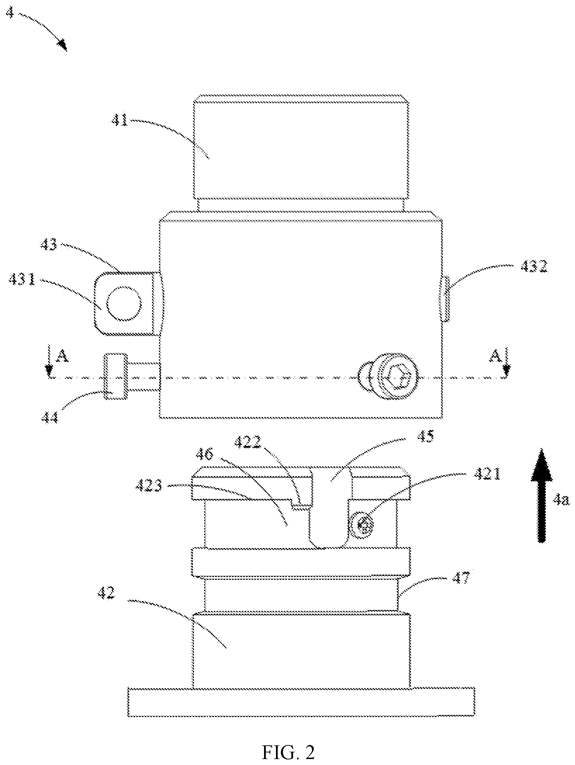

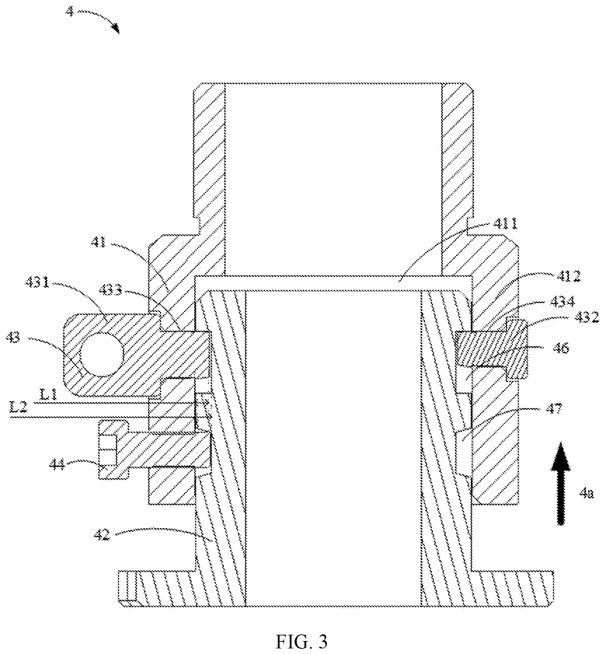

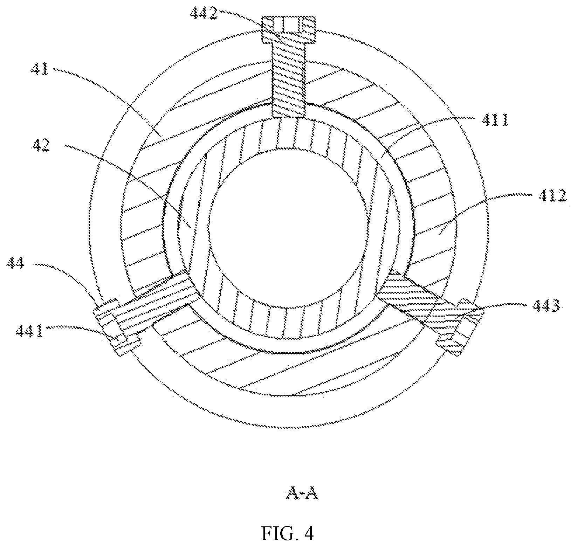

Figure 1 is a front view of a camera according to an embodiment of the disclosure. The disclosure provides a camera 1, which includes: a camera body 2 and a camera mounting assembly 4. The camera mounting assembly 4 includes a mounting base 41 and a mounting head 42. One of the mounting base 41 and the mounting head 42 is disposed on the top of the camera body 2, while the other is disposed on an external building or a mounting bracket, etc., thereby a connection between the mounting base 41 and the mounting head 42 achieves a quick mounting of the camera body 2. In the embodiment shown in Figure 1, the mounting head 42 is disposed on the top of the camera body 2. For example, the mounting head 42 is integrally disposed on the top of the camera body 2, or is disposed on the top of the camera body 2 by a detachable structure. In some other embodiments (not shown), the mounting base 41 can be disposed on the top of the camera body 2, and can also be of an integrated design or a detachable design. The disclosure takes the mounting head 42 disposed on the top of the camera body 2 as an example for detailed description. Figure 2 is a front view of a camera mounting assembly according to an embodiment of the disclosure; figure 3 is a cross-sectional view of the camera mounting assembly shown in figure 2; figure 4 is a cross-sectional view of the camera mounting assembly shown in figure 2 along an A-A section. The disclosure provides a camera mounting assembly 4, which includes: the mounting base 41 and the mounting head 42, wherein the mounting base 41 includes a mounting cavity 411, an enclosure wall 412 disposed around a periphery of the mounting cavity 411, and multiple pre-hanging members 43 and multiple fasteners 44 disposed on the enclosure wall 412, the multiple pre-hanging members 43 remain relatively fixed to the enclosure wall 412, and extend into the mounting cavity 411, and the multiple fasteners 44 are movably disposed in the enclosure wall 412, and can be extended into and out of the mounting cavity 411. The mounting head 42 is inserted into the mounting cavity 411, and the mounting head 42 includes multiple mounting grooves 45 that are matched with the multiple pre-hanging members 43 in one-to-one correspondence, and first groove bodies 46 that are connected to respective mounting grooves 45 correspondingly. The mounting grooves 45 extend along an insertion direction 4a of the mounting head 42 and penetrate to the top of the mounting head 42. The first groove bodies 46 extend along a direction perpendicular to the insertion direction 4a, the multiple pre-hanging members 43 enter the first groove bodies 46 through the mounting grooves 45 corresponding to the multiple pre-hanging members respectively, and are hung to the mounting head 42 in the first groove bodies 46, thereby realizing pre-hanging of the mounting head 42 with the mounting base 41. In this way, before fixing the mounting head 42 with the mounting base 41, the mounting head 42 is prevented from being detached from the mounting base 41. The pre-hanging process is simple and convenient to operate, for example, aligning the pre-hanging members 43 with the mounting grooves 45 before insertion, and inserting the mounting head 42 along the insertion direction 4a, and then rotating the mounting head 42 so that the pre-hanging members 43 enter into the first groove bodies 46, so as to complete the pre-hanging. After the mounting head 42 is pre-hung to the mounting base 41, it can be fixed by the multiple fasteners 44, the multiple fasteners 44 can exit the mounting cavity 411 during pre-hanging to prevent interference with the mounting head 42 during insertion. After the mounting head 42 is hung to the mounting base 41, the multiple fasteners 44 can be extended into the mounting cavity 411 to abut against the mounting head 42, and the mounting head 42 is clamped and fixed to the mounting base 41 by clamping force. The camera mounting assembly 4 of the disclosure is simultaneously provided with multiple pre-hanging members 43 and multiple fasteners 44, which achieves balanced force during pre-hanging, and can firmly fix a heavier camera, effectively reducing the risk of the camera shaking and loosening in a vibrating environment.

In this embodiment, the mounting base 41 and the mounting head 42 match with each other, so that the both can be quickly connected, therefore, the mounting base 41 is also called a quick mounting base, referred to as quick mount base for short. Correspondingly, the mounting head 42is also called a quick mounting head, referred to as quick mount head for short. In addition, when the mounting head 42 is connected with the mounting base 41, the mounting head 42 is disposed in the mounting cavity 411 in an insertion manner, therefore, the mounting cavity 411 is further called an insertion cavity.

Furthermore, the first groove bodies 46 are configured to accommodate the pre-hanging members 43, the hanging of the mounting head 42 and the mounting base 41 can be achieved by the matching of pre-hanging members 43 with the first groove bodies 46. Therefore, the first groove bodies 46 are further called pre-hanging grooves.

In some embodiments, the multiple pre-hanging members 43 are arranged in a centrally symmetrical arrangement, for example, arranged symmetrically with respect to a symmetrical center of the mounting head 42. In this way, horizontal hanging and placing of the mounting head 42 can be achieved, thereby preventing the situation that the mounting head 42 is tilted after assembling due to an excessive weight of the camera body 2, which affects the use of the camera body 2, and improving the reliability of the camera mounting assembly 4 of the disclosure.

In some embodiments, the multiple fasteners 44 are arranged in a centrally symmetrical arrangement, the fasteners 44 when have been fixed, closely abut against the mounting head 42, and thrust given by the multiple fasteners 44 to the mounting head 42 converges at a center point, in this way, a fastening effect of the multiple fasteners 44 is realized, thereby improving the stability of the camera mounting assembly 4 of the disclosure.

Please refer to figure 4, in some embodiments, the multiple fasteners 44 include a first fastener 441, a second fastener 442, and a third fastener 443, wherein an angle interval between every two of the first fastener 441, the second fastener 442 and the third fastener 443 is 120°. In this way, the first fastener 441, the second fastener 442 and the third fastener 443 are evenly distributed along the circumferential direction, and jointly clamp the mounting head 42, and the thrust given to the mounting head 42 converges at the center point, thereby improving the reliability of the camera mounting assembly 4 of the disclosure.

In some embodiments, the multiple pre-hanging members 43 may be integrated with the mounting base 41. In the embodiment shown in figure 2, the multiple pre-hanging members 43 are screws manufactured individually, which are then fixed to the enclosure wall 412. In this way, the manufacturing process can be simplified and the production cost can be reduced. The pre-hanging members 43 are closely connected with the mounting base 41, which enhances the load-bearing capacity of the pre-hanging members 43, thereby improves the reliability of the camera mounting assembly 4 of the disclosure.

In some embodiments, mounting steps of the mounting base 41 and the mounting head 42 of the camera mounting assembly 4 according to the disclosure are as follows: 1. inserting the mounting head 42 vertically into the mounting cavity 411 along the insertion direction 4a, and the multiple pre-hanging members 43 penetrate through the multiple mounting grooves 45 that are matched with the multiple pre-hanging members in one-to-one correspondence; 2. rotating the mounting head 42, along the first groove bodies 46, to a required angle in a direction of the mounting grooves 45 towards the first groove bodies 46; 3. mounting the multiple fasteners 44 and fixing them. During the mounting process of the camera mounting assembly 4 of the disclosure, only the multiple fasteners 44 need to be tightened by tools, In this way, the camera mounting assembly 4 of the disclosure can be mounted simply, quickly, and easily used while ensuring stability.

Please refer to figure 2, along the insertion direction 4a, the multiple pre-hanging members 43 are flush in height, the multiple fasteners 44 are flush in height, and the multiple fasteners 44 and the multiple pre-hanging members 43 are located at different heights. The mounting head 42 further includes fastening grooves 47 extending parallel to the first groove bodies 46, the multiple fasteners 44 abut against the mounting head 42 within the fastening grooves 47. In the embodiment shown in figure 2, the multiple fasteners 44 and the multiple pre-hanging members 43 are arranged in two upper and lower rows, the multiple pre-hanging members 43 are located above the multiple fasteners 44. The fastening grooves 47 are provided below the first groove bodies 46, and the multiple fasteners 44 abut against the mounting head 42 in the fastening grooves 47 to provide a clamping force to the mounting head 42. Adding the fastening grooves 47 can prevent the fasteners 44 from deflecting, and avoid clamping failure, thus improving the reliability of the camera connection assembly 4 of the disclosure. The fastening grooves 47 may form a connected groove extending continuously along the circumferential direction of the outer surface of the mounting head 42. The fasteners 44 and the pre-hanging members 43 are divided into upper and lower layers to facilitate the arrangement of the multiple pre-hanging members 43 and the multiple fasteners 44 in the circumferential direction. Moreover, the fasteners 44 and the pre-hanging members 43 are divided into upper and lower layers, which is equivalent to increasing the mounting length and improving the overall mounting reliability.

In other embodiments, along the insertion direction 4a, the multiple pre-hanging members 43 are flush in height, the multiple fasteners 44 are flush in height, and both the multiple fasteners 44 and the multiple pre-hanging members 43 are located at the same height, and the multiple fasteners 44 abut against the mounting head 42 within the first groove bodies 46. In this way, the multiple fasteners 44 and the multiple pre-hanging members 43 share the first groove bodies 46, which can simplify the structure of the mounting base 41. In some embodiments, the multiple fasteners 44 can also be arranged in multiple layers.

In some embodiments, the size (L1) of the portions of the multiple pre-hanging members 43 extending into the first groove bodies 46 along the extending direction is smaller than the depth (L2) of the first groove bodies 46 along this direction (the direction in which the pre-hanging members 43 extend into the first groove bodies 46). In this way, a gap can be left between an end of the pre-hanging member 43 and a bottom surface of the first groove body 46, so that the mounting head 42 can be smoothly rotated to a required angle, making the camera connection assembly 4 of the disclosure simple to mount and easy to use.

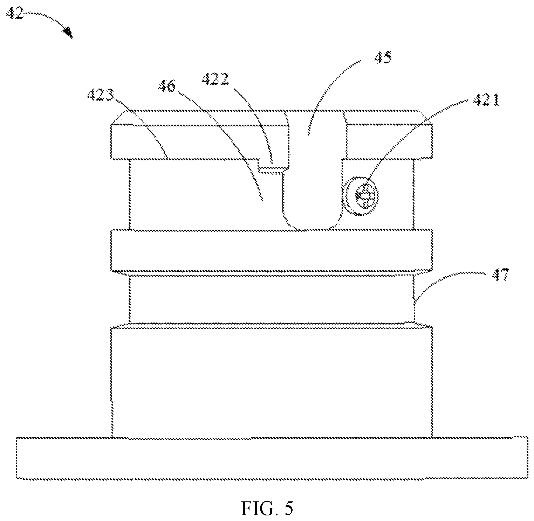

Figure 5 is a front view of the mounting head of the camera mounting assembly according to the embodiment shown in figure 2. In some embodiments, the first groove bodies 46 that are connected to respective mounting grooves 45 correspondingly, are connected with each other to form an annular groove on the outer surface of the mounting head 42. In this way, the length size of the first groove body 46 is increased, the rotation angle of the mounting head 42 is increased, and an adjustable range during pre-hanging is larger. In some embodiments, the mounting head 42 is configured as a cylindrical structure, and the first groove bodies 46 forms a continuously extending annular groove on the outer surface of the mounting head 42. In addition, the mounting head 42 can be configured as a hollow cylindrical structure, thereby reducing weight and achieving lightweight. The thickness of the wall of the mounting head 42 needs to be greater than the depth of the mounting groove 45, the first groove body 46 and the fastening groove 47.

In some embodiments, the mounting head 42 further includes a first limit structure 421, which protrudes from a bottom surface of the first groove body 46 and is disposed at a position where the mounting groove 45 meets the first groove body 46, and is located at a side of the mounting groove 45 facing away from the first groove body 46. The first limit structure 421 is configured to limit a rotation direction of the mounting head 42 relative to the mounting base 41 during the pre-hanging process. That is to say, during the pre-hanging process, the mounting head 42 only rotates in a single direction relative to the mounting base 41. In this way, when inserted into the mounting base 41, the mounting head 42 can only rotate in one direction relative to the mounting base 41, and when it rotates in an opposite direction, it is blocked by the first limit structure 421, thus ensuring the uniqueness of the angle of rotation of the mounted camera. In the embodiment shown in figure 5, the first limit structure 421 adopts a screw fixed to the mounting head 42, the screw protrudes from the bottom surface of the first groove body 46 and can limit and block the rotation of the pre-hanging members 43. It should be noted that the arrangement of the first limit structure 421 is not limited to this.

Please continue to refer to figure 5, in some embodiments, the mounting head 42 further includes a second limit structure 422, the mounting head 42 includes a hanging contact surface 423 that is in hanging contact with the pre-hanging member 43, the second limit structure 422 protrudes from the hanging contact surface 423 in the opposite direction of the insertion direction 4a, and is located at a side of the mounting groove 45 facing the first groove body 46. When pre-hanging, the pre-hanging member 43 can cross the second limit structure 422 to enter the first groove body 46, after pre-hanging, under the gravity of the mounting head 42, the hanging contact surface 423 and the pre-hanging member 43 maintain contact for limiting the pre-hanging member 43, after being hung, from detaching from the first groove body 46, so as to avoid the risk of the camera body 2 falling due to vibration. In this embodiment, the second limit structure 422 adopts a structure integral with the mounting head 42. In some other embodiments, the second limit structure 422 may further adopt a screw protruding from the hanging contact surface 423.

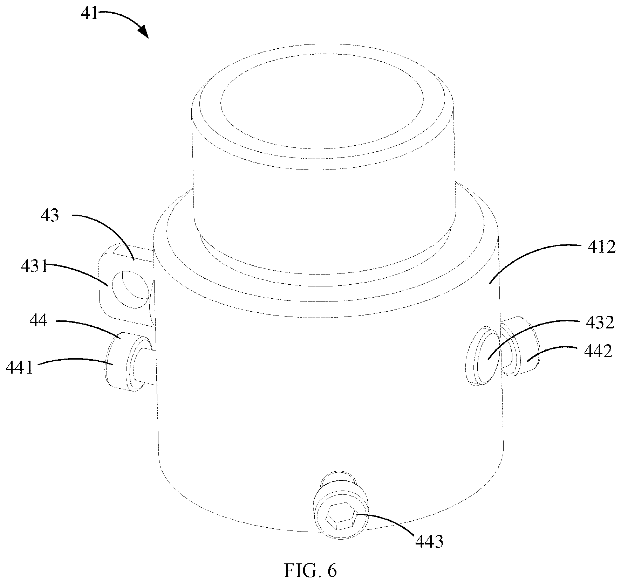

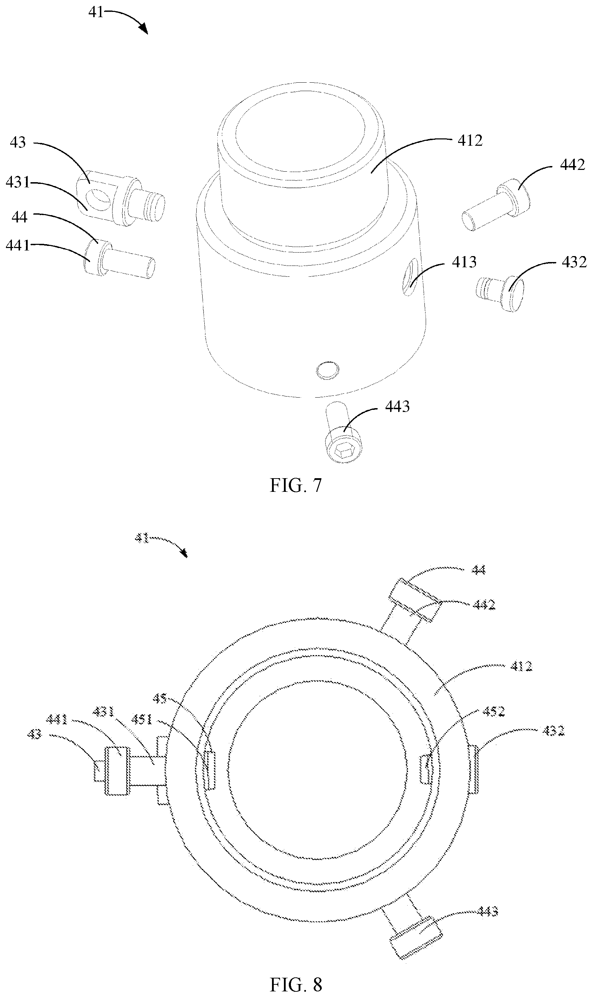

Figure 6 is a perspective schematic view of the mounting base of the camera mounting assembly according to the embodiment shown in figure 2; figure 7 is an exploded schematic view of the mounting base of the camera mounting assembly according to the embodiment shown in figure 2; figure 8 is a bottom view of the mounting base of the camera mounting assembly according to the embodiment shown in figure 2.

Please refer to figures 6 to 8, the multiple pre-hanging members 43 include a first pre-hanging member 431 and a second pre-hanging member 432, the multiple mounting grooves 45 include a first mounting groove 451 matched with the first pre-hanging member 431 and a second mounting groove 452 matched with the second pre-hanging member 432. In an orthographic projection along the insertion direction 4a, the size and/or shape of the first mounting groove 451 is different from that of the second mounting groove 452, the size and/or shape of the first pre-hanging member 431 is adapted to that of the first mounting groove 451, and the size and/or shape of the second pre-hanging member 432 is adapted to that of the second mounting groove 452. In this way, the mounting head 42 can be inserted into the mounting cavity 411 only when by aligning the matched first mounting groove 451 with the first pre-hanging member 431 and aligning the matched second mounting groove 452 with the second pre-hanging member 432, thereby realizing the uniqueness of the relative position of the mounting base 41 and the mounting head 42.

In the embodiment shown in Figure 2, the first pre-hanging member 431 is a flat head screw, and the second pre-hanging member 432 is a round head screw, the two have different external dimensions and shapes, in this way, it is easy to identify the first mounting groove 451 and the second mounting groove 452 respectively adapted to the two. Of course, the specific arrangement manner of the first pre-hanging member 431 and the second pre-hanging member 432 is not limited to this.

In some embodiments, the multiple pre-hanging members 43 include a first pre-hanging member 431 and a second pre-hanging member 432, the first pre-hanging member 431 includes a first contact surface 433 that is in hanging contact with the mounting head 42, the second pre-hanging member 432 includes a second contact surface 434 that is in hanging contact with the mounting head 42, along the insertion direction 4a, the first contact surface 433 and the second contact surface 434 are flush in height. In this way, it can be ensured that the mounting head 42 is in a horizontal position after being pre-hung, which in turn ensures that the camera is in a horizontal position.

The first contact surface 433 is a portion of the first pre-hanging member 431 that is in hanging contact with the mounting head 42, therefore, the first contact surface 433 may also be called a first pre-hung surface. Correspondingly, the second contact surface 434 is a portion of the second pre-hanging member 432 that is in hanging contact with the mounting head 42, therefore, the second contact surface 434 may also be called a second pre-hung surface.

In some embodiments, an angular interval between the first contact surface 433 and the second contact surface 434 is 180°. In this way, the first contact surface 433 and the second contact surface 434 are far away from each other, so that the force on the mounting head 42 in the circumferential direction is more balanced, which can effectively improve the pre-hanging stability of the mounting head 42. The number of pre-hanging members 43 is not limited and may include three or more pre-hanging members (not shown). In this way, the number of pre-hanging points can be increased to further improve the hanging stability.

In the illustrated embodiment, the multiple pre-hanging members 43 are always fixedly penetrated through the enclosure wall 412, and the multiple pre-hanging members 43 can be manufactured separately, the enclosure wall 412 further includes a pre-hanging hole 413. In this way, when the mounting head 42 cannot be kept horizontal due to wear and tear of the multiple pre-hanging members 43, the pre-hanging members 43 can be directly replaced without replacing the entire mounting base 41, which saves costs and facilitates maintenance. In other embodiments, the pre-hanging members 43 can be directly integrally manufactured with the mounting base 41 to improve the reliability of the camera mounting assembly 4 of the disclosure.

In the embodiment that the mounting base 41 is disposed on the camera body 2, the opening of the mounting cavity 411 faces upwards, and the mounting head is inserted downwards into the mounting cavity 411, which can also achieve the pre-hanging and fixing of the mounting base 41 and the mounting head 42. However, it should be noted that the matching structures of the mounting base 41 and the mounting head 42 can be adaptively deformed according to actual mounting requirements.

## Claims

1. A camera mounting assembly (4) comprising:
a quick mounting base (41), comprising an insertion cavity (411), an enclosure wall (412) disposed around a periphery of the insertion cavity (411), and multiple pre-hanging members (43) and multiple fasteners (44) disposed on the enclosure wall (412), wherein the multiple pre-hanging members (43) remain relatively fixed to the enclosure wall (412), and extend into the insertion cavity (411), the multiple fasteners (44) are movably disposed in the enclosure wall (412) and can be extended into and out of the insertion cavity (411);
a quick mounting head (42), inserted into the insertion cavity (411), comprising multiple mounting grooves (45) that are matched with the multiple pre-hanging members (43) in one-to-one correspondence, and pre-hanging grooves (46) that are connected to respective mounting grooves (45) correspondingly, the mounting grooves (45) extend along an insertion direction (4a) of the quick mounting head (42), the pre-hanging grooves (46) extend along a direction perpendicular to the insertion direction (4a), and the multiple pre-hanging members (43) enter the pre-hanging grooves (46) through the mounting grooves (45) corresponding to the multiple pre-hanging members (43) respectively, and are hung to the quick mounting head (42) in the pre-hanging grooves (46), and the multiple fasteners (44) can abut against the quick mounting head (42) when extending into the insertion cavity (411), so that the quick mounting head (42) is clamped and fixed to the quick mounting base (41);
the camera mounting assembly being **characterised in that** along the insertion direction (4a), the multiple pre-hanging members (43) are flush in height, the multiple fasteners (44) are flush in height, and the multiple fasteners (44) and the multiple pre-hanging members (43) are located at different heights, the quick mounting head (42) further comprises fastening grooves (47) extending parallel to the pre-hanging grooves (46), the multiple fasteners (44) abut against the quick mounting head (42) within the fastening grooves (47).

2. The camera mounting assembly (4) according to claim 1, wherein along the insertion direction (4a), the multiple pre-hanging members (43) are flush in height, the multiple fasteners (44) are flush in height, and both the multiple fasteners (44) and the multiple pre-hanging members (43) are located at a same height, and the multiple fasteners (44) abut against the quick mounting head (42) within the pre-hanging grooves (46).

3. The camera mounting assembly (4) according to claim 1 or 2, wherein the multiple pre-hanging members (43) comprise a first pre-hanging member (431) and a second pre-hanging member (432), and the multiple mounting grooves (45) comprise a first mounting groove (451) matched with the first pre-hanging member (431) and a second mounting groove (452) matched with the second pre-hanging member (432); in an orthographic projection along the insertion direction (4a), a size and/or shape of the first mounting groove (451) is different from a size and/or shape of the second mounting groove (452), a size and/or shape of the first pre-hanging member (431) is adapted to the size and/or shape of the first mounting groove (451), and a size and/or shape of the second pre-hanging member (432) is adapted to the size and/or shape of the second mounting groove (452).

4. The camera mounting assembly (4) according to claim 3, wherein the first pre-hanging member (431) comprises a first pre-hung surface (433) that is in hanging contact with the quick mounting head (42), and the second pre-hanging member (432) comprises a second pre-hung surface (434) that is in hanging contact with the quick mounting head (42); along the insertion direction (4a), the first pre-hung surface (433) and the second pre-hung surface (434) are flush in height, and an interval between the first pre-hung surface (433) and the second pre-hung surface (434) is 180°.

5. The camera mounting assembly (4) according to claim 1 or 2, wherein the multiple fasteners (44) comprise a first fastener (441), a second fastener (442) and a third fastener (443), an interval between every two of the first fastener (441), the second fastener (442) and the third fastener (443) is 120°.

6. The camera mounting assembly (4) according to claim 1 or 2, wherein a length of the multiple pre-hanging members (43) extending into the pre-hanging grooves (46) along an extending direction is smaller than a depth of the pre-hanging grooves (46) along the extending direction.

7. The camera mounting assembly (4) according to claim 1 or 2, wherein the quick mounting head (42) further comprises a first limit structure (421), the first limit structure (421) protrudes from a bottom surface of a pre-hanging groove (46), and is located at a side of a mounting groove (45) facing away from the pre-hanging groove (46), and the first limit structure (421) is configured to limit a rotation direction of the quick mounting head (42) relative to the quick mounting base (41) during the pre-hanging process; and/or
wherein the quick mounting head (42) further comprises a second limit structure (422), and the quick mounting head (42) comprises a hanging contact surface (423) that is in hanging contact with a pre-hanging member (43), the second limit structure (422) protrudes from the hanging contact surface (423) in an opposite direction of the insertion direction (4a), and is located at a side of a mounting groove (45) facing the pre-hanging groove (46), and the second limit structure (422) is configured to limit the quick mounting head (42), after being hung, from detaching from the pre-hanging groove (46).

8. The camera mounting assembly (4) according to claim 1 or 2, wherein the pre-hanging grooves (46) that are connected to the respective mounting grooves (45) correspondingly, are connected with each other, to form a connected groove on an outer surface of the quick mounting head (42).

9. A camera assembly comprising:
a camera body (2); and
a camera mounting assembly (4) according to any one of claims 1 to 8, wherein one of the quick mounting base (41) and the quick mounting head (42) is disposed on a top of the camera body (2).

## Patentansprüche

1. Kameramontageanordnung (4), aufweisend:
eine Schnellmontagebasis (41), die einen Einführhohlraum (411), eine Umschließungswand (412), die um einen Umfang des Einführhohlraums (411) herum angeordnet ist, mehrere Einhängeelemente (43) und mehrere Befestigungselemente (44) aufweist, die an der Umschließungswand (412) angeordnet sind, wobei die mehreren Einhängeelemente (43) an der Umschließungswand (412) relativ fixiert bleiben und sich in den Einführhohlraum (411) erstrecken, wobei die mehreren Befestigungselemente (44) bewegbar in der Umschließungswand (412) vorgesehen sind und in den Einführhohlraum (411) einfahren und aus diesem ausfahren können;
einen Schnellmontagekopf (42), der in den Einführhohlraum (411) eingeführt ist, der mehrere Montagenuten (45), die mit den mehreren Einhängeelementen (43) in einer Eins-zu-Eins-Entsprechung übereinstimmen, und Einhängenuten (46) aufweist, die mit jeweiligen Montagenuten (45) entsprechend verbunden sind, wobei die Montagenuten (45) entlang einer Einführrichtung (4a) des Schnellmontagekopfs (42) verlaufen, die Einhängenuten (46) entlang einer Richtung senkrecht zur Einführrichtung (4a) verlaufen, und die mehreren Einhängeelemente (43) in die Einhängenuten (46) durch die Montagenuten (45) entsprechend den mehreren Einhängeelementen (43) eintreten und am Schnellmontagekopf (42) in die Einhängenuten (46) eingehängt werden, und die mehreren Befestigungselemente (44) am Schnellmontagekopf (42) anliegen können, wenn sie sich in den Einführhohlraum (411) erstrecken, so dass der Schnellmontagekopf (42) mit der Schnellmontagebasis (41) verspannt und an dieser fixiert ist;
wobei die Kameramontageanordnung **dadurch gekennzeichnet ist, dass**
entlang der Einführrichtung (4a) die mehreren Einhängeelemente (43) in der Höhe fluchten, die mehreren Befestigungselemente (44) in der Höhe fluchten und sich die mehreren Befestigungselemente (44) und die mehreren Einhängeelemente (43) auf verschiedenen Höhen befinden, wobei der Schnellmontagekopf (42) darüber hinaus Befestigungsnuten (47) aufweist, die parallel zu den Einhängenuten (46) verlaufen, und die mehreren Befestigungselemente (44) innerhalb der Befestigungsnuten (47) am Schnellmontagekopf (42) anliegen.

2. Kameramontageanordnung (4) nach Anspruch 1, wobei entlang der Einführrichtung (4a) die mehreren Einhängeelemente (43) in der Höhe fluchten, die mehreren Befestigungselemente (44) in der Höhe fluchten und sich sowohl die mehreren Befestigungselemente (44) als auch die mehreren Einhängeelemente (43) auf derselben Höhe befinden, und die mehreren Befestigungselemente (44) innerhalb der Einhängenuten (46) am Schnellmontagekopf (42) anliegen.

3. Kameramontageanordnung (4) nach Anspruch 1 oder 2, wobei die mehreren Einhängeelemente (43) ein erstes Einhängeelement (431) und ein zweites Einhängeelement (432) aufweisen und die mehreren Montagenuten (45) eine erste Montagenut (451), die mit dem ersten Einhängeelement (431) übereinstimmt, und eine zweite Montagenut (452) aufweisen, die mit dem zweiten Einhängeelement (432) übereinstimmt; wobei in einer orthographischen Projektion entlang der Einführrichtung (4a) eine Größe und/oder Form der ersten Montagenut (451) sich von einer Größe und/oder Form der zweiten Montagenut (452) unterscheiden, eine Größe und/oder Form des ersten Einhängeelements (431) an die Größe und/oder Form der ersten Montagenut (451) angepasst sind, und eine Größe und/oder Form des zweiten Einhängeelements (432) an die Größe und/oder Form der zweiten Montagenut (452) angepasst sind.

4. Kameramontageanordnung (4) nach Anspruch 3, wobei das erste Einhängeelement (431) eine erste Einhängefläche (433) aufweist, die in hängendem Kontakt mit dem Schnellmontagekopf (42) ist, und das zweite Einhängeelement (432) eine zweite Einhängefläche (434) aufweist, die in hängendem Kontakt mit dem Schnellmontagekopf (42) ist; wobei entlang der Einführrichtung (4a) die erste Einhängefläche (433) und die zweite Einhängefläche (434) in der Höhe fluchten und ein Abstand zwischen der ersten Einhängefläche (433) und der zweiten Einhängefläche (434) gleich 180° ist.

5. Kameramontageanordnung (4) nach Anspruch 1 oder 2, wobei die mehreren Befestigungselemente (44) ein erstes Befestigungselement (441), ein zweites Befestigungselement (442) und ein drittes Befestigungselement (443) aufweisen und ein Abstand zwischen je zwei des ersten Befestigungselements (441), zweiten Befestigungselements (442) und dritten Befestigungselements (443) gleich 120° ist.

6. Kameramontageanordnung (4) nach Anspruch 1 oder 2, wobei eine Länge der mehreren Einhängeelemente (43), die sich in die Einhängenuten (46) entlang einer Erstreckungsrichtung erstrecken, kleiner ist als eine Tiefe der Einhängenuten (46) entlang der Erstreckungsrichtung.

7. Kameramontageanordnung (4) nach Anspruch 1 oder 2, wobei der Schnellmontagekopf (42) darüber hinaus eine erste Begrenzungsstruktur (421) aufweist, die erste Begrenzungsstruktur (421) von einer Bodenfläche einer Einhängenut (46) vorsteht und sich an einer Seite einer Montagenut (45) befindet, die von der Einhängenut (46) abgewandt ist, und die erste Begrenzungsstruktur (421) dafür ausgelegt ist, während des Einhängeprozesses eine Drehrichtung des Schnellmontagekopfs (42) relativ zur Schnellmontagebasis (41) zu begrenzen; und/oder
wobei der Schnellmontagekopf (42) darüber hinaus eine zweite Begrenzungsstruktur (422) aufweist und der Schnellmontagekopf (42) eine Hängekontaktfläche (423) aufweist, die in hängendem Kontakt mit einem Einhängeelement (43) ist, die zweite Begrenzungsstruktur (422) von der Hängekontaktfläche (423) in einer zur Einführrichtung (4a) entgegengesetzten Richtung vorsteht und sich an einer Seite einer Montagenut (45) befindet, die der Einhängenut (46) zugewandt ist, und die zweite Begrenzungsstruktur (422) dafür ausgelegt ist, zu beschränken, dass sich der Schnellmontagekopf (42) nach dem Einhängen aus der Einhängenut (46) löst.

8. Kameramontageanordnung (4) nach Anspruch 1 oder 2, wobei die Einhängenuten (46), die mit den jeweiligen Montagenuten (45) entsprechend verbunden sind, miteinander verbunden sind, um an einer Außenfläche des Schnellmontagekopfs (42) eine verbundene Nut zu bilden.

9. Kameraanordnung, aufweisend:
eine Kamerakorpus (2); und
eine Kameramontageanordnung (4) nach einem der Ansprüche 1 bis 8, wobei die Schnellmontagebasis (41) oder der Schnellmontagekopf (42) oben auf dem Kamerakorpus (2) angeordnet ist.

## Revendications

1. Ensemble de montage de caméra (4), comprenant :
une base de montage rapide (41) comprenant une cavité d'insertion (411), une paroi d'enceinte (412) disposée autour d'une périphérie de la cavité d'insertion (411), une pluralité d'éléments d'accrochage (43) et une pluralité d'éléments de fixation (44) disposés au niveau de la paroi d'enceinte (412), la pluralité d'éléments d'accrochage (43) restant relativement fixés à la paroi d'enceinte (412) et s'étendant dans la cavité d'insertion (411), la pluralité d'éléments de fixation (44) étant prévus de manière mobile dans la paroi d'enceinte (412) et pouvant entrer dans la cavité d'insertion (411) et sortir de celle-ci ;
une tête de montage rapide (42) qui est insérée dans la cavité d'insertion (411) et comprend une pluralité de rainures de montage (45) qui coïncident avec la pluralité d'éléments d'accrochage (43) dans une correspondance biunivoque, et des rainures d'accrochage (46) reliées de manière correspondante aux rainures de montage respectives (45), les rainures de montage (45) s'étendant le long d'une direction d'insertion (4a) de la tête de montage rapide (42), les rainures d'accrochage (46) s'étendant le long d'une direction perpendiculaire à la direction d'insertion (4a), et la pluralité d'éléments d'accrochage (43) pénètrent dans les rainures d'accrochage (46) à travers les rainures de montage (45) correspondant à la pluralité d'éléments d'accrochage (43) et s'accrochent dans les rainures d'accrochage (46) au niveau de la tête de montage rapide (42), et la pluralité d'éléments de fixation (44) peuvent s'appuyer contre la tête de montage rapide (42) lorsqu'elles s'étendent dans la cavité d'insertion (411), de sorte que la tête de montage rapide (42) soit serrée avec la base de montage rapide (41) et fixée à celle-ci ;
l'ensemble de montage de caméra étant **caractérisé en ce que**
le long de la direction d'insertion (4a), la pluralité d'éléments d'accrochage (43) sont alignés en hauteur, la pluralité d'éléments de fixation (44) sont alignés en hauteur et la pluralité d'éléments de fixation (44) et la pluralité d'éléments d'accrochage (43) sont situés à des hauteurs différentes, la tête de montage rapide (42) comprend en outre des rainures de fixation (47) qui s'étendent parallèlement aux rainures d'accrochage (46), et la pluralité d'éléments de fixation (44) s'appuient contre la tête de montage rapide (42) à l'intérieur des rainures de fixation (47).

2. L'ensemble de montage de caméra (4) selon la revendication 1, sachant que, le long de la direction d'insertion (4a), la pluralité d'éléments d'accrochage (43) sont alignés en hauteur, la pluralité d'éléments de fixation (44) sont alignés en hauteur et la pluralité d'éléments de fixation (44) ainsi que la pluralité d'éléments d'accrochage (43) sont situés tous à la même hauteur, et la pluralité d'éléments de fixation (44) s'appuient contre la tête de montage rapide (42) à l'intérieur des rainures d'accrochage (46).

3. L'ensemble de montage de caméra (4) selon la revendication 1 ou 2, sachant que la pluralité d'éléments d'accrochage (43) comprend un premier élément d'accrochage (431) et un deuxième élément d'accrochage (432), et la pluralité de rainures de montage (45) comprend une première rainure de montage (451) qui coïncide avec le premier élément d'accrochage (431) et une deuxième rainure de montage (452) qui coïncide avec le deuxième élément d'accrochage (432) ; sachant que, dans une projection orthographique le long de la direction d'insertion (4a), une taille et/ou une forme de la première rainure de montage (451) se distinguent d'une taille et/ou d'une forme de la deuxième rainure de montage (452), une taille et/ou une forme du premier élément d'accrochage (431) sont adaptées à la taille et/ou à la forme de la première rainure de montage (451), et une taille et/ou une forme du deuxième élément d'accrochage (432) sont adaptées à la taille et/ou à la forme de la deuxième rainure de montage (452).

4. L'ensemble de montage de caméra (4) selon la revendication 3, sachant que le premier élément d'accrochage (431) comprend une première surface d'accrochage (433) en contact suspendu avec la tête de montage rapide (42), et le deuxième élément d'accrochage (432) comprend une deuxième surface d'accrochage (434) en contact suspendu avec la tête de montage rapide (42) ; sachant que, le long de la direction d'insertion (4a), la première surface d'accrochage (433) et la deuxième surface d'accrochage (434) sont alignées en hauteur et qu'une distance entre la première surface d'accrochage (433) et la deuxième surface d'accrochage (434) est égale à 180°.

5. L'ensemble de montage de caméra (4) selon la revendication 1 ou 2, sachant que la pluralité d'éléments de fixation (44) comprend un premier élément de fixation (441), un deuxième élément de fixation (442) et un troisième élément de fixation (443), et la distance entre deux éléments parmi le premier élément de fixation (441), le deuxième élément de fixation (442) et le troisième élément de fixation (443) est égale à 120°.

6. L'ensemble de montage de caméra (4) selon la revendication 1 ou 2, sachant qu'une longueur de la pluralité d'éléments d'accrochage (43) s'étendant dans les rainures d'accrochage (46) le long d'une direction d'extension est inférieure à une profondeur des rainures d'accrochage (46) le long de la direction d'extension.

7. L'ensemble de montage de caméra (4) selon la revendication 1 ou 2, sachant que la tête de montage rapide (42) comprend en outre une première structure de limitation (421), la première structure de limitation (421) faisant saillie depuis une surface de sol d'une rainure d'accrochage (46) et étant située sur un côté d'une rainure de montage (45) qui est opposée à la rainure d'accrochage (46), et la première structure de limitation (421) étant conçue pour limiter, pendant le processus d'accrochage, un sens de rotation de la tête de montage rapide (42) par rapport à la base de montage rapide (41) ; et/ou
sachant que la tête de montage rapide (42) comprend en outre une deuxième structure de limitation (422) et que la tête de montage rapide (42) comprend une surface de contact de suspension (423) qui est en contact de suspension avec un élément d'accrochage (43), la deuxième structure de limitation (422) fait saillie à partir de la surface de contact de suspension (423) dans une direction opposée à la direction d'insertion (4a) et est située sur un côté d'une rainure de montage (45) qui est tournée vers la rainure d'accrochage (46), et la deuxième structure de limitation (422) est conçue pour empêcher la tête de montage rapide (42) de se détacher de la rainure d'accrochage (46) après l'accrochage.

8. L'ensemble de montage de caméra (4) selon la revendication 1 ou 2, sachant que les rainures d'accrochage (46) reliées de manière correspondante aux rainures de montage respectives (45) sont reliées entre elles pour former, au niveau d'une surface extérieure de la tête de montage rapide (42), une rainure reliée.

9. Dispositif de caméra, comprenant :
un corps de caméra (2) ; et
un ensemble de montage de caméra (4) selon l'une des revendications 1 à 8, sachant que la base de montage rapide (41) ou la tête de montage rapide (42) est disposée en haut du corps de caméra (2).
